# EUROPÄISCHE PATENTSCHRIFT

(11) **EP 1 414 259 B1**
(45) Veröffentlichungstag und Bekanntmachung des Hinweises auf die Patenterteilung: **29.12.2004**
(21) Anmeldenummer: 02405899.2
(22) Anmeldetag: 21.10.2002
(51) Int. Cl.: H04Q 7/38, H04L 12/56

(54) **Verfahren zum Detektieren eines duplizierten Identifizierungsmoduls**
Method for detecting a duplicated identification module
Procédé pour détecter un module d'identification doublé

(43) Veröffentlichungstag der Anmeldung: 28.04.2004
(73) Patentinhaber: Swisscom Mobile AG, 3050 Bern (CH)
(72) Erfinder: Oswald, Rudolf, 3014 Bern (CH)
(74) Vertreter: BOVARD AG - Patentanwälte

(56) Entgegenhaltungen:
- EP-A- 1 209 935
- WO-A-02/052784
- DE-A- 19 818 846
- US-B1- 6 341 220
- "Universal Mobile Telecommunications System (UMTS);3G Security; Security Architecture (3g TS 33.102 version 3.1. Release 1999)" ETSI TS 133 102 V3.3.1, XX, XX, 1. Januar 2000 (2000-01-01), Seiten 1-60, XP002167547

## Beschreibung

### Technisches Gebiet

Die vorliegende Erfindung betrifft ein Verfahren zum Detektieren eines duplizierten Identifizierungsmoduls. Die Erfindung betrifft insbesondere ein Verfahren zum Detektieren eines duplizierten Identifizierungsmoduls, das eine Teilnehmeridentifizierung umfasst und mit einem Kommunikationsendgerät entfernbar verbunden ist, in welchem Verfahren die Teilnehmeridentifizierung vom Identifizierungsmodul über ein Telekommunikationsnetz an eine computer-basierte Zugangskontrolleinheit übermittelt wird.

### Stand der Technik

Identifizierungsmodule, die eine gespeicherte Teilnehmeridentifizierung umfassen und mit Kommunikationsendgeräten entfernbar verbindbar sind, werden insbesondere zur Identifizierung von Teilnehmern in Mobilfunknetzen verwendet. Solche Identifizierungsmodule werden auch für die Zugangskontrolle zu Diensten verwendet, die über ein Kommunikationsnetz verfügbar sind, beispielsweise kostenpflichtige Fernsehprogramme (Pay-TV), die über Kabelnetze oder via Satellit verbreitet werden, oder Dienste und Daten, die über das Internet oder ein anderes Festnetz angeboten werden. Die Identifizierungsmodule sind typischerweise elektronische Module, die eine kontaktbehaftete oder kontaktlose Schnittstelle zur entfernbaren Verbindung mit Kommunikationsendgeräten umfassen. Die Identifizierungsmodule sind vielfach als Chipkarten ausgeführt, die einen elektronischen Speicher zur Speicherung von Programmen und Daten, insbesondere die Teilnehmeridentifizierung, sowie einen Prozessor zur Ausführung der Programme umfassen. Wenn die Identifizierungsmodule mit einem Kommunikationsendgerät verbunden werden, können die jeweils darin gespeicherten Teilnehmeridentifizierungen über ein Telekommunikationsnetz an eine computer-basierte Zugangskontrolleinheit übermittelt werden. Typischerweise werden beim Datenaustausch zwischen einem Identifizierungsmodul und der Zugangskontrolleinheit kryptografische Algorithmen und Verschlüsselungsverfahren verwendet, um die Teilnehmeridentifizierung geheim zu halten und die Authentizität des Identifizierungsmoduls sicher zu stellen. Es bleibt allerdings die Gefahr, dass Identifizierungsmodule einschliesslich der darin gespeicherten Daten, insbesondere die Teilnehmeridentifizierung und kryptografische Schlüssel, und Programme dupliziert werden. Der Prozess des Duplizierens wird oft auch als Klonen oder Kopieren bezeichnet. Duplizierte Identifizierungsmodule werden auch als geklonte oder kopierte Identifizierungsmodule bezeichnet.

In der Patentanmeldung WO 02/052389 wird ein Verfahren zur Detektion von geklonten Identifizierungsmodulen beschrieben. Im Verfahren gemäss WO 02/052389 werden die Identifizierungsmodule jeweils in ein Aufnahmemodul eines zugangskontrollierten Endgeräts eingeführt und dadurch kontaktbehaftet mit dem Endgerät verbunden. Gemäss der Lehre von WO 02/052389 werden durch die Identifizierungsmodule in den Endgeräten jeweils eindeutige Geräteidentifizierungen gelesen und im betreffenden ldentifizierungsmodul gespeichert. Auf Anfrage einer computer-basierten Prüfzentrale werden die im betreffenden Identifizierungsmodul gespeicherte Teilnehmeridentifizierung und die chronologische Sequenz der gespeicherten Geräteidentifizierungen an die Prüfzentrale übermittelt. In der Prüfzentrale wird die empfangene Sequenz der Geräteidentifizierungen mit einer gespeicherten Sequenz verglichen, die in der Prüfzentrale anlässlich einer früheren Verbindung mit dem Identifizierungsmodul gespeichert wurde. Falls die frühere Sequenz nicht mit dem Anfang der empfangenen Sequenz übereinstimmt, wird dem betreffenden Identifizierungsmodul der Zugang verwehrt. Das Verfahren gemäss WO 02/052389 eignet sich insbesondere für Anwendungen, in denen die Endgeräte, mit denen ein Identifizierungsmodul verbunden wird, mehrfach und häufig gewechselt werden, wobei nicht alle Endgeräte mit der Prüfzentrale verbunden sein müssen. Das Verfahren gemäss WO 02/052389 eignet sich allerdings nicht sehr gut zur Detektion von duplizierten Identifizierungsmodulen, wenn diese ständig mit den selben Endgeräten verbunden bleiben, was insbesondere in Mobilfunknetzen typisch ist. Zudem kann das Verfahren gemäss WO 02/052389 nur angewendet werden, wenn sämtliche Endgeräte, mit denen die Identifizierungsmodule verbunden werden können, mit einer eindeutigen Geräteidentifizierung versehen werden. Schliesslich kann das Verfahren gemäss WO 02/052389 nur mit speziellen Identifizierungsmodulen verwendet werden, die so eingerichtet sind, dass sie Geräteidentifizierungen in den Endgeräten lesen, im Identifizierungsmodul speichern und auf Anfrage an die Prüfzentrale übermitteln.

In der Patentanmeldung WO 02/052784 wird ein Verfahren zur Authentifizierung einer Datenverbindung beschrieben. Diese Patentanmeldung bezieht sich insbesondere auf die Authentifizierung von mobilen Datenstationen gegenüber Netzwerkdiensten, wobei über ein Datennetzwerk wie zum Beispiel das Intemet kommuniziert wird. Das in WO 02/052784 beschriebene Verfahren verwendet auf der Seite der Datenstation ein Identifikationsmodul. Ein weiteres Element des Verfahrens ist ein zentraler Authentifizierungsserver. Im Identifikationsmodul ist eine Sequenznummer gespeichert, welche mit einer vom Authentifizierungsserver jeweils neu erzeugten Sequenznummer verglichen und dann dieser nachgeführt wird. Für den Fall, dass die Differenz zwischen der neu erzeugten Sequenznummer des Authentifizierungsservers und der älteren auf dem Identifikationsmodul gespeicherten Sequenznummer einen bestimmten Wert überschreitet, wird die Authentifizierungssequenz zwischen der Datenstation und dem Netzwerkdienst abgebrochen oder es wird in einer bevorzugten Ausführungsform von der Datenstation eine Synchronisation der Sequenznummer des Authentifizierungsservers ausgelöst. In der Patentanmeldung WO 02/052784 wird das Problem der Authentifizierung einer mobilen Datenstation gegenüber Neizwerkdiensten insbesondere auch im Hinblick auf eine möglichst einfache Integration in bestehende Authentifizierungsverfahren gelöst. Die Lösung des Problems der Detektion von duplizierten ldentifikationsmodulen wird in der Patentanmeldung WO 02/052784 nicht behandelt.

### Darstellung der Erfindung

Es ist eine Aufgabe der vorliegenden Erfindung, ein neues, nicht die Nachteile des Stands der Technik aufweisendes Verfahren vorzuschlagen zum Detektieren von duplizierten Identifizierungsmodulen, die jeweils eine Teilnehmeridentifizierung umfassen und mit einem Kommunikationsendgerät entfernbar verbunden sind.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die Identifizierungsmodule umfassen jeweils eine Teilnehmeridentifizierung und sind mit einem Kommunikationsendgerät entfernbar verbunden. Die Teilnehmeridentifizierung wird jeweils vom Identifizierungsmodul über ein Telekommunikationsnetz an eine computer-basierte Zugangskontrolleinheit übermittelt.

Die oben genannten Ziele werden durch die vorliegende Erfindung insbesondere dadurch erreicht, dass durch die Zugangskontrolleinheit eine neue, der Teilnehmeridentifizierung zugeordnete Sequenznummer ermittelt wird, dass die neue Sequenznummer von der Zugangskontrolleinheit über das Telekommunikationsnetz an das Identifizierungsmodul übermittelt wird, dass die neue Sequenznummer durch das Identifizierungsmodul mit einer im Identifizierungsmodul gespeicherten älteren Sequenznummer verglichen wird, dass eine Meldung, die die ältere Sequenznummer umfasst, vom Identifizierungsmodul über das Telekommunikationsnetz an die Zugangskontrolleinheit übermittelt wird, wenn die neue Sequenznummer um mehr als einen definierten Differenzwert grösser ist, als die ältere Sequenznummer, dass die Teilnehmeridentifizierung, die neue Sequenznummer und die ältere Sequenznummer auf Grund der Meldung an eine computer-basierte Detektionseinheit übermittelt werden, und dass ein Detektionsdatensatz, der die Teilnehmeridentifizierung umfasst, in der Detektionseinheit gespeichert wird. Weil Sequenznummern als sequentielle Nummern mit aufsteigendem Wert erzeugt werden, treten übergrosse Wertsprünge zwischen einer gespeicherten älteren Sequenznummer und einer empfangenen neuen Sequenznummer auf, wenn im Telekommunikationsnetz mehrere Identifizierungsmodule mit der gleichen Teilnehmeridentifizierung verwendet werden. Diese übergrossen Wertsprünge werden durch das vorgeschlagene Verfahren detektiert. Ein Vorteil dieses Verfahrens besteht insbesondere darin, dass es unabhängig davon ausführbar ist, ob das Identifizierungsmodul immer mit dem selben Kommunikationsendgerät verbunden ist oder mit verschiedenen Kommunikationsendgeräten verbunden wird. Zur Anwendung dieses Verfahrens müssen die Kommunikationsendgeräte überdies nicht mit eindeutigen Geräteidentifizierungen versehen werden. Schliesslich brauchen die Identifizierungsmodule nicht speziell angepasst zu werden, wenn das Verfahren in einem UMTS-Mobilfunknetz (Universal Mobile Telecommunications System) unter Verwendung von Identifizierungsmodulen mit standardgemässen USIM-Modulen (Universal Subscriber Identity Module) ausgeführt wird. Die USIM-Module vergleichen nämlich standardgemäss eine neue, von der Zugangskontrolleinheit empfangene Sequenznummer mit einer im Identifizierungsmodul gespeicherten älteren Sequenznummer und übermitteln eine Meldung, die die ältere Sequenznummer umfasst, über das Telekommunikationsnetz an die Zugangskontrolleinheit, wenn die neue Sequenznummer um mehr als einen definierten Differenzwert grösser ist, als die ältere Sequenznummer.

In einer Ausführungsvariante wird der definierte Differenzwert durch die Detektionseinheit über das Kommunikationsnetz an das Identifizierungsmodul übermittelt. Der Vorteil dieser Ausführungsvariante besteht darin, dass der Differenzwert dynamisch über das Telekommunikationsnetz verändert werden kann. Der Differenzwert kann so spezifisch für ein bestimmtes Identifizierungsmodul definiert werden und somit dem Kommunikationsverhalten des betreffenden Teilnehmers angepasst werden. Zum Beispiel kann der Differenzwert im Identifizierungsmodul eines Teilnehmers, der sich oft zwischen den Telekommunikationsnetzen verschiedener Betreiber bewegt, einen grösseren Wert aufweisen als derjenige eines Teilnehmers, der sich ständig im Telekommunikationsnetz seines Heimbetreibers aufhält. Der übermittelte definierte Differenzwert kann für mehrmalige Verwendung im Identifizierungsmodul gespeichert werden oder für einmalige Verwendung zusammen mit der neuen Sequenznummer an das Identifizierungsmodul übermittelt werden.

In einer Ausführungsvariante wird vor der Speicherung des Detektionsdatensatzes die Differenz zwischen der neuen Sequenznummer und der älteren Sequenznummer durch die Detektionseinheit berechnet, und der Detektionsdatensatz wird nicht in der Detektionseinheit gespeichert, wenn die berechnete Differenz kleiner als ein definierter Maximalwert ist. Der Vorteil dieser Ausführungsvariante besteht darin, dass die Speicherung eines Detektionsdatensatzes abhängig von der Differenz zwischen der neuen Sequenznummer und der älteren Sequenznummer vorgenommen werden kann. Dadurch ist es möglich, das Kriterium für Speicherung von Detektionsdatensätzen unter den im Identifizierungsmodul gespeicherten definierten Differenzwert zu setzen, ohne dafür einen neuen Differenzwert über das Telekommunikationsnetz an die Identifizierungsmodule übertragen zu müssen.

Vorzugsweise wird durch die Detektionseinheit die Plausibilität von Kommunikationsverbindungen geprüft, die im Telekommunikationsnetz mit der im Detektionsdatensatz gespeicherten Teilnehmeridentifizierung durchgeführt werden/wurden, und die Teilnehmeridentifizierung wird durch die Detektionseinheit als dupliziert markiert, wenn eine dieser Kommunikationsverbindungen nicht plausibel ist. Es wird beispielsweise geprüft, ob Kommunikationsverbindungen, die unter Verwendung der betreffenden Teilnehmeridentifizierung durchgeführt wurden, zeitlich und/oder örtlich plausibel sind. Zum Beispiel werden in der Detektionseinheit Kommunikationsdatensätze gespeichert, die der im Detektionsdatensatz enthaltenen Teilnehmeridentifizierung zugeordnet sind und die mindestens Angaben über einen Kommunikationszeitbereich und/oder Angaben über einen Kommunikationsaufenthaltsort umfassen. Die Teilnehmeridentifizierung wird durch die Detektionseinheit als dupliziert markiert, wenn der Teilnehmeridentifizierung Kommunikationsdatensätze mit überlappenden Kommunikationszeitbereichen zugeordnet sind oder wenn der Teilnehmeridentifizierung Kommunikationsdatensätze zugeordnet sind, deren Kommunikationsaufenthaltsorte um eine Distanz auseinander liegen, während deren Kommunikationszeitbereiche um mehr als eine von der Distanz abhängige minimale Zeitspanne auseinander liegen. Das vorgeschlagene Verfahren ermöglicht die Plausibilitätsprüfungen von Kommunikationsverbindungen für eine begrenzte Anzahl von Teilnehmeridentifizierungen durchzuführen, die auf Identifizierungsmodulen 2 gespeichert sind, die als möglicherweise dupliziert detektiert wurden. Die Durchführung der Plausibilitätsprüfungen für sämtliche im Telekommunikationsnetz 6 durchgeführte Kommunikationsverbindungen wäre so aufwendig, dass sie praktisch nicht realisierbar ist.

In einer Ausführungsvariante wird beim Ermitteln der neuen Sequenznummer in der Zugangskontrolleinheit, eine noch nicht verwendete Sequenznummer aus einem der Teilnehmeridentifizierung zugeordneten Satz von Sequenznummern entnommen. Der Satz wird durch die Zugangskontrolleinheit von einer Authentifizierungszentrale angefordert, wenn in der Zugangskontrolleinheit die Teilnehmeridentifizierung vom Identifizierungsmodul empfangen wird und der Teilnehmeridentifizierung keine nicht verwendeten Sequenznummern zugeordnet sind. Der Satz wird durch die Authentifizierungseinheit mit aufsteigenden Sequenznummern versehen. Durch die Zugangskontrolleinheit wird der Wert der höchsten im Satz enthaltenen Sequenznummer an die Detektionseinheit übermittelt, wenn nach der Übermittlung der niedersten Sequenznummer des Satzes an das Identifizierungsmodul in der Zugangskontrolleinheit keine diesbezügliche Empfangsbestätigung vom Identifizierungsmodul empfangen wird. Vor der Speicherung des Detektionsdatensatzes wird in der Detektionseinheit überprüft, ob die höchste Sequenznummer des Satzes grösser als die ältere Sequenznummer und kleiner als neue Sequenznummer ist. Zugangskontrolleinheiten in Telekommunikationsnetzen verschiedener Betreiber können der Detektionseinheit somit mitteilen, welche Sequenznummern zwar von der Authentifizierungszentrale angefordert und bezogen wurden, jedoch nicht an das betreffende Identifizierungsmodul übermittelt werden konnten. Dies hat den Vorteil, dass Detektionsdatensätze nicht in der Detektionseinheit gespeichert werden, wenn der übergrosse Wertsprung in der Differenz zwischen der älteren und der neueren Sequenznummer wegen nicht verwendeten Sequenznummern verursacht wurde.

Vorzugsweise wird beim Vergleichen der neuen Sequenznummer mit der älteren Sequenznummer die grösste im Identifizierungsmodul gespeicherte Sequenznummer als ältere Sequenznummer verwendet und die neue Sequenznummer wird im Identifizierungsmodul gespeichert, wenn sie einerseits um nicht mehr als den definierten Differenzwert grösser ist, als die ältere Sequenznummer, und wenn sie andererseits grösser ist, als weitere im ldentifizierungsmodul gespeicherte Sequenznummern, die von der Zugangskontrolleinheit empfangen wurden.

Vorzugsweise wird der definierte Differenzwert auf einen Wert festgelegt, der wesentlich kleiner als 2²⁸ ist, beispielsweise auf einen Wert im Bereich von 16 bis 64. Im oben genannten UMTS-Mobilfunknetz wird in den USIM-Modulen die Differenz zwischen der neuen empfangenen Sequenznummer und der gespeicherten älteren Sequenznummer mit dem Differenzwert (Δ) verglichen, um einen Überlauf, einen so genannten Wrap Around, der Sequenznummern im USIM-Modul zu verhindern, wofür ein Differenzwert von 2²⁸ empfohlen wird (siehe Technische Spezifikation: 3rd Generation Partnership Project; Technical Specification Group Services and System Aspects; 3G Security; Security Architecture; Release 1999; 3GPP TS 33.102 V3.12.0, June 2002; Kapitel C.2 und C.3.2; erhältlich bei: GPP Support Office Address, 650 Route des Lucioles - Sophia Antipolis, Valborne, France). Die Festlegung eines wesentlich kleineren Differenzwerts ermöglicht kleine Wertsprünge zwischen der gespeicherten älteren Sequenznummer und der empfangenen neuen Sequenznummer zu detektieren und somit die Gegenwart von duplizierten Identifizierungsmodulen zu detektieren.

Vorzugsweise wird ein Mobilfunknetz als Kommunikationsnetz verwendet, insbesondere ein UMTS-Mobilfunknetz, es wird ein mobiles Kommunikationsendgerät verwendet, es wird ein Identifizierungsmodul verwendet, das ein USIM-Modul umfasst, es wird eine VLR-Einheit (Visitor Location Register) oder eine SGSN-Einheit (Serving GPRS Support Node, GPRS - Generalised Packet Radio Service) als Zugangskontrolleinheit verwendet, es werden Sequenznummern aus Authentifizierungsvektoren verwendet, die durch eine Authentifizierungszentrale des Mobilfunknetzes generiert werden, welche durch die Teilnehmeridentifizierung bestimmt ist, es wird eine Resynchronisationsmeldung als Meldung verwendet, und die Teilnehmeridentifizierung, die neue Sequenznummer und die ältere Sequenznummer werden von der Zugangskontrolleinheit über die bestimmte Authentifizierungszentrale an die Detektionseinheit weitergeleitet.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch ein Telekommunikationsnetz mit einer Zugangskontrollvorrichtung und einer Authentifizierungszentrale illustriert, das mit einem Kommunikationsendgerät verbunden ist.
Figur 2 zeigt ein Zeitdiagramm, das schematisch den Verfahrensablauf anhand des Datenaustauschs zwischen einem mit einem Kommunikationsendgerät verbundenen Identifizierungsmodul, einer Zugangskontrolleinheit, einer Authentifizierungszentrale und einer damit verbundenen Detektionseinheit illustriert.

### Wege zur Ausführung der Erfindung

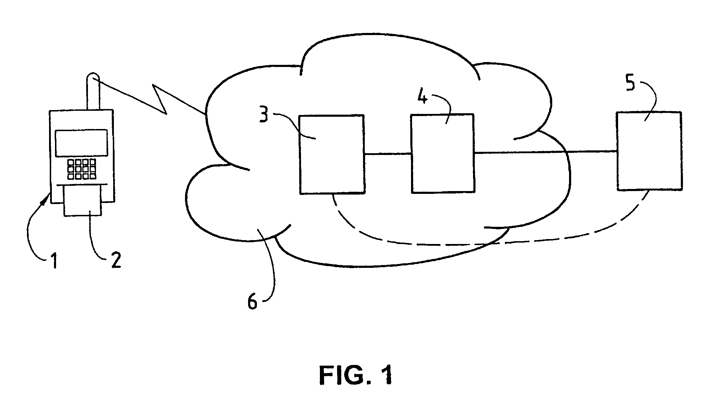

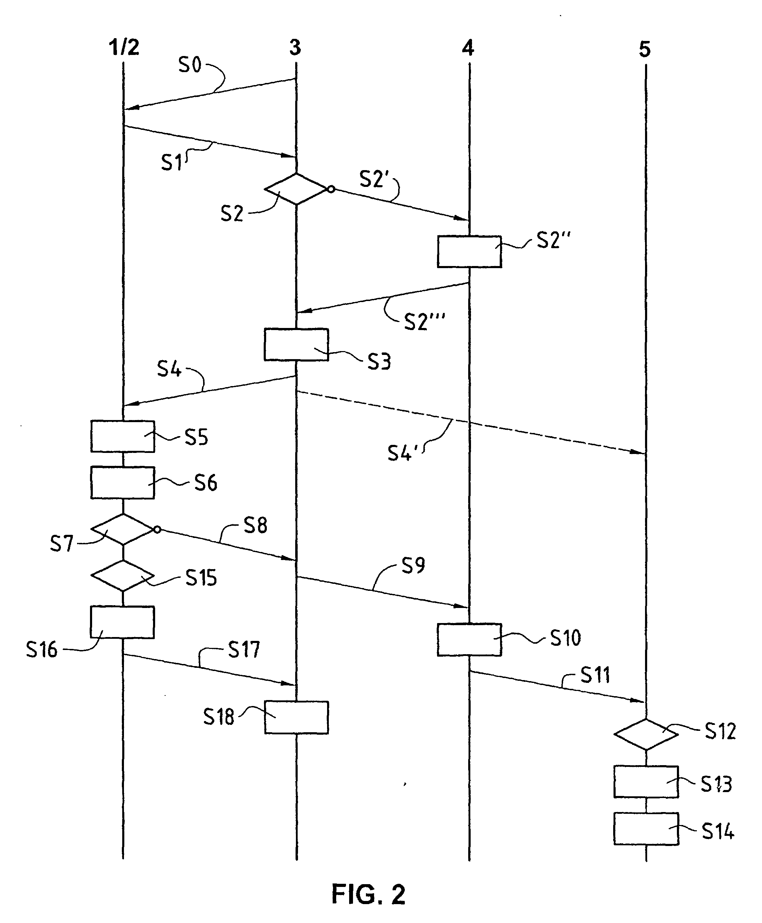

In den Figuren 1 und 2 werden einander entsprechende, gleiche Komponenten durch gleiche Bezugszeichen bezeichnet.

In der Figur 1 bezeichnet das Bezugszeichen 6 ein Telekommunikationsnetz, zum Beispiel ein Festnetz beispielsweise ein ISDN-Netz (Integrated Services Digital Network), ein LAN (Local Area Network) oder ein auf dem Internet Protokoll basierendes Internet-Netzwerk, oder ein Mobilfunknetz beispielsweise ein GSM- oder UMTS-Netz oder ein WLAN (Wireless Local Area Network). Das Telekommunikationsnetz 6 ist vorzugsweise ein UMTS-Mobilfunknetz.

Wie in der Figur 1 schematisch dargestellt ist, umfasst das Telekommunikationsnetz 6 eine Zugangskontrolleinheit 3 und eine Authentifizierungszentrale 4, die jeweils einen oder mehrere Computer umfassen und für den Datenaustausch miteinander verbunden sind. Die Zugangskontrolleinheit 3 und die Authentifizierungszentrale 4 umfassen jeweils funktionale Module, die als programmierte Softwarefunktionen ausgeführt sind, zur Ausführung der später mit Bezug auf die Figur 2 beschriebenen Funktionen. Die Zugangskontrolleinheit 3 ist vorzugsweise eine VLR-Einheit oder eine SGSN-Einheit für ein UMTS-Mobilfunknetz. Die Authentifizierungszentrale 4 ist vorzugsweise eine AuC-Einheit (Authentication Centre) für ein GSM- oder ein UMTS-Mobilfunknetz.

Das Bezugszeichen 5 bezieht sich auf eine computer-basierte Detektionseinheit, die mit der Authentifizierungszentrale 4 und in einer Ausführungsvariante mit der Zugangskontrolleinheit 3 für den Datenaustausch verbunden ist. Die Detektionseinheit 5 umfasst vorzugsweise einen von der Authentifizierungszentrale 4 separaten Computer, sie kann aber auch zusammen mit der Authentifizierungszentrale 4 auf einem gemeinsamen Computer ausgeführt werden. Die Detektionseinheit 5 umfasst funktionale Module, die als programmierte Softwarefunktionen ausgeführt sind, zur Ausführung der später mit Bezug auf die Figur 2 beschriebenen Funktionen.

Das Bezugszeichen 1 bezeichnet ein Kommunikationsendgerät, das für die Kommunikation über das Telekommunikationsnetz 6 eingerichtet ist. Das Kommunikationsendgerät 1 ist vorzugsweise ein mobiles Kommunikationsendgerät für die Kommunikation über ein UMTS-Mobilfunknetz.

Das Bezugszeichen 2 bezeichnet ein Identifizierungsmodul, das entfernbar mit dem Kommunikationsendgerät 1 verbunden ist. Das Identifizierungsmodul 2 umfasst einen Daten- und Programmspeicher sowie einen Prozessor zur Ausführung von gespeicherten Softwareprogrammen, deren Funktionen nachfolgend mit Bezug zur Figur 2 beschrieben werden. Das Identifizierungsmodul 2 umfasst eine gespeicherte Teilnehmeridentifizierung und ist vorzugsweise als Chipkarte ausgeführt. Die Teilnehmeridentifizierung ist vorzugsweise eine IMSI (International Mobile Subscriber Identification), welche den Teilnehmer und dessen Heimnetz und damit die Authentifizierungszentrale dieses Heimnetzes identifiziert. Das Identifizierungsmodul 2 und das Kommunikationsendgerät 1 umfassen eine kontaktlose oder kontaktbehaftete Geräteschnittstelle zur entfernbaren Verbindung des Identifizierungsmoduls 2 mit dem Kommunikationsendgerät 1. Die Geräteschnittstelle ermöglicht den Datenaustausch zwischen dem Identifizierungsmodul 2 und dem Kommunikationsendgerät 1, so dass mittels des Kommunikationsendgeräts 1 Daten zwischen dem Identifizierungsmodul 2 und Einheiten im Telekommunikationsnetz 6 ausgetauscht werden können. Das Identifizierungsmodul 2 ist vorzugsweise ein USIM-Modul für UMTS-Mobilfunknetze.

In den folgenden Abschnitten werden mit Bezug auf die Figur 2 die durch das Identifizierungsmodul 2, die Zugangskontrolleinheit 3, die Authentifizierungszentrale 4 und die Detektionseinheit 5 ausgeführten Funktionen und der Ablauf des Verfahrens zum Detektieren eines duplizierten Identifizierungsmoduls 2 beschrieben.

Im Schritt S0 wird von der Zugangskontrolleinheit 3 eine Identifizierungsaufforderung über das Telekommunikationsnetz 6 an das mit dem Kommunikationsendgerät 1 verbundene Identifizierungsmodul 2 übermittelt.

Im Schritt S1 wird die im Identifizierungsmodul 2 gespeicherte Teilnehmeridentifizierung über das Telekommunikationsnetz 6 an die Zugangskontrolleinheit 3 übermittelt.

Im Schritt S2 überprüft die Zugangskontrolleinheit 3, ob der empfangenen Teilnehmeridentifizierung ein Satz (Array) von Sequenznummern zugeordnet ist und ob in diesem Satz gegebenenfalls eine Sequenznummer gespeichert ist, die noch nicht als verwendet gekennzeichnet ist. Falls der empfangenen Teilnehmeridentifizierung eine noch nicht verwendete Sequenznummer zugeordnet ist, führt die Zugangskontrolleinheit 3 den Schritt S3 aus. Andernfalls führt die Zugangskontrolleinheit 3 den Schritt S2' aus.

Im Schritt S2' fordert die Zugangskontrolleinheit 3 von der Authentifizierungszentrate 4 im Heimnetz des Teilnehmers, welches durch die Teilnehmeridentifizierung bestimmt ist, einen neuen Satz von Sequenznummern für die im Schritt S1 empfangene Teilnehmeridentifizierung an.

Im Schritt S2" bestimmt die Authentifizierungseinheit 4 einen neuen Satz von aufsteigenden Sequenznummern für die im Schritt S2' von der Zugangskontrolleinheit 3 empfangene Teilnehmeridentifizierung. Dabei werden die Sequenznummern so bestimmt, dass sie jeweils mindestens einen Sequenzteil umfassen, der mittels eines der betreffenden Teilnehmeridentifizierung zugeordneten Zählers bestimmt wird und sich durch einfache Inkrementierung des Sequenzteils der letzten für die betreffende Teilnehmeridentifizierung ausgelieferten Sequenznummer ergibt. Falls der Sequenzteil der letzten Sequenznummer für die betreffende Teilnehmeridentifizierung beispielsweise 8 ist, und falls in einem Satz jeweils drei Sequenznummern enthalten sind, ergeben sich die Sequenzteile 9, 10 und 11 für den Satz mit den nächsten drei Sequenznummern. Die Authentifizierungseinheit 4 erzeugt einen Satz von Authentifizierungsvektoren, die jeweils eine der bestimmten Sequenznummern und eine Zufallszahl umfassen.

Im Schritt S2'" übermittelt die Authentifizierungszentrale 4 den im Schritt S2" erzeugten Satz von Authentifizierungsvektoren mit den angeforderten Sequenznummern zur Speicherung an die Zugangskontrolleinheit 3.

Im Schritt S3 bestimmt die Zugangskontrolleinheit 3 den Authentifizierungsvektor mit der niedrigsten noch nicht als verwendet gekennzeichneten Sequenznummer, der der im Schritt S1 empfangenen Teilnehmeridentifizierung zugeordnet ist.

Im Schritt S4 übermittelt die Zugangskontrolleinheit 3 eine Authentifizierungsaufforderung mit der im Schritt S3 bestimmten Sequenznummer und der im Schritt S3 bestimmten Zufallszahl über das Telekommunikationsnetz 6 an das Identifizierungsmodul 2.

In einer Ausführungsvariante wird durch die Zugangskontrolleinheit 3 im Schritt S4' der Wert der höchsten Sequenznummer, die im Satz von Authentifizierungsvektoren enthalten ist, der im Schritt S2'" empfangen wurde, an die Detektionseinheit 5 übermittelt, wenn nach der Übermittlung der niedersten Sequenznummer dieses Satzes an das ldentifizierungsmodul 2 in der Zugangskontrolleinheit 3 keine diesbezügliche Empfangsbestätigung vom Identifizierungsmodul 2 empfangen worden ist.

Falls die Sequenznummer in verschlüsselter Form übermittelt wurde, entschlüsselt das Identifizierungsmodul 2 im Schritt S5 die im Schritt S4 empfangene Sequenznummer.

Im Schritt S6 ermittelt das Identifizierungsmodul 2 aus einem im Identifizierungsmodul 2 gespeicherten Array von vorgängig über das Telekommunikationsnetz 6 empfangenen Sequenznummern diejenige gespeicherte Sequenznummer mit dem grössten Wert und berechnet die Differenz zwischen dieser grössten Sequenznummer und der im Schritt S4 empfangenen (und gegebenenfalls im Schritt S5 entschlüsselten) Sequenznummer.

Im Schritt S7 vergleicht das Identifizierungsmodul 2 die im Schritt S6 berechnete Differenz mit einem im Identifizierungsmodul 2 gespeicherten Differenzwert (oder mit einem temporären überschreibenden Differenzwert, der zusammen mit der Sequenznummer empfangen wird). Falls die berechnete Differenz kleiner als oder gleich gross wie der gespeicherte (respektive empfangene) Differenzwert ist, das heisst, falls die empfangene Sequenznummer nicht um mehr als den gespeicherten (respektive empfangenen) Differenzwert grösser als die grösste gespeicherte Sequenznummer ist, fährt das Identifizierungsmodul 2 im Schritt S15 fort. Falls die berechnete Differenz grösser als der gespeicherte (respektive empfangene) Differenzwert ist, das heisst, falls die empfangene Sequenznummer um mehr als den gespeicherten (respektive empfangenen) Differenzwert grösser als die grösste gespeicherte Sequenznummer ist, fährt das Identifizierungsmodul 2 im Schritt S8 fort. Der Differenzwert wird vorzugsweise auf einen Wert festgelegt, der wesentlich kleiner als 2²⁸ ist, beispielsweise auf einen Wert im Bereich von 16 bis 64.

Im Schritt S8 übermittelt das Identifizierungsmodul 2 eine Meldung über das Telekommunikationsnetz 6 an die Zugangskontrolleinheit 3. Die Meldung umfasst die im Schritt S6 ermittelte grösste gespeicherte Sequenznummer, beispielsweise verschlüsselt. Die Meldung wird beispielsweise in der Form einer UMTS-Resynchronisationsmeldung übermittelt.

Im Schritt S9 übermittelt die Zugangskontrolleinheit 3 die im Schritt S8 empfangene grösste im Identifizierungsmodul 2 gespeicherte Sequenznummer, die im Schritt S1 empfangene Teilnehmeridentifizierung und die im Schritt S4 übermittelte Zufallszahl an die Authentifizierungszentrale 4.

Im Schritt S10 ermittelt die Authentifizierungszentrale 4 die im Schritt S4 durch die Zugangskontrolleinheit 3 an das Identifizierungsmodul 2 übermittelte Sequenznummer auf Grund der im Schritt S2'" übermittelten Authentifizierungsvektoren und der im Schritt S9 empfangenen Zufallszahl.

Im Schritt S11 übermittelt die Authentifizierungszentrale 4 die im Schritt S9 empfangene grösste im Identifizierungsmodul 2 gespeicherte Sequenznummer, die im Schritt S9 empfangene Teilnehmeridentifizierung und die im Schritt S10 ermittelte Sequenznummer, die im Schritt S4 von der Zugangskontrolleinheit 3 an das Identifizierungsmodul 2 übermittelt wurde.

Im Schritt S13 wird in der Detektionseinheit 5 ein Detektionsdatensatz gespeichert, der die im Schritt S11 empfangene grösste im ldentifizierungsmodul 2 gespeicherte Sequenznummer, die im Schritt S11 empfangene Teilnehmeridentifizierung und die im Schritt S11 empfangene Sequenznummer, die im Schritt S4 von der Zugangskontrolleinheit 3 an das Identifizierungsmodul 2 übermittelt wurde, umfasst.

Im Schritt S14 wird durch die Detektionseinheit 5 die Plausibilität von Kommunikationsverbindungen geprüft, die im Telekommunikationsnetz 6 mit der im Detektionsdatensatz gespeicherten Teilnehmeridentifizierung durchgeführt werden/wurden. Die Plausibilität wird auf Grund von Kommunikationsdatensätzen geprüft, die der im Detektionsdatensatz enthaltenen Teilnehmeridentifizierung zugeordnet sind. Die Kommunikationsdatensätze sind vorzugsweise so genannte CDR-Belege (Call Detail Records), die im Telekommunikationsnetz 6 erfasst werden und für die Plausibilitätsprüfung zur Speicherung an die Detektionseinheit 5 übermittelt werden. Die Kommunikationsdatensätze umfassen jeweils eine Teilnehmeridentifizierung, Angaben über einen Kommunikationszeitbereich, zum Beispiel mit Tageszeit und Datum, und Angaben über einen Kommunikationsaufenthaltsort, zum Beispiel eine Zellenidentifizierung einer Funkzelle im Telekommunikationsnetz 6 oder Koordinaten. Auf Grund der Kommunikationsdatensätze kann untersucht werden, ob die Kommunikationsverbindungen, die unter Verwendung der betreffenden Teilnehmeridentifizierung durchgeführt wurden, zeitlich und/oder örtlich plausibel sind. Für die zeitliche Plausibilitätsprüfung ermittelt die Detektionseinheit 5, ob der im Detektionsdatensatz gespeicherten Teilnehmeridentifizierung Kommunikationsdatensätze mit überlappenden Kommunikationszeitbereichen zugeordnet sind. Für die örtliche Plausibilitätsprüfung ermittelt die Detektionseinheit 5, ob der im Detektionsdatensatz gespeicherten Teilnehmeridentifizierung Kommunikationsdatensätze zugeordnet sind, deren Kommunikationszeitbereiche um eine Distanz auseinander liegen während deren Kommunikationszeitbereiche um mehr als eine von der Distanz abhängige minimale Zeitspanne auseinander liegen. Zu diesem Zweck umfasst die Detektionseinheit 5 beispielsweise Distanztabellen, die Distanzwerte zwischen definierten Aufenthaltsorten angeben, und Tabellen mit gespeicherten Distanzwerten und diesen Distanzwerten zugeordneten Zeitspannenwerten. Es wird also untersucht, ob mit der Teilnehmeridentifizierung Kommunikationsverbindungen an Orten durchgeführt wurden, die so weit auseinander liegen, dass sie innerhalb der Zeitspanne, die zwischen den Kommunikationsverbindungen liegt, vom Teilnehmer nicht aufgesucht werden konnten. Die im Detektionsdatensatz gespeicherte Teilnehmeridentifizierung wird durch die Detektionseinheit 5 als dupliziert markiert, wenn eine oder mehrere der Kommunikationsverbindungen, die unter Verwendung der betreffenden Teilnehmeridentifizierung durchgeführt wurden, zeitlich und/oder örtlich nicht plausibel sind.

In einer Ausführungsvariante wird durch die Detektionseinheit 5 im Schritt S12, vor der Speicherung des Detektionsdatensatzes im Schritt S13, die Differenz berechnet zwischen der im Schritt S11 empfangenen grössten im Identifizierungsmodul 2 gespeicherten Sequenznummer und der im Schritt S11 empfangenen Sequenznummer, die im Schritt S2 von der Zugangskontrolleinheit 3 an das Identifizierungsmodul 2 übermittelt wurde. Falls die berechnete Differenz kleiner als ein definierter Maximalwert ist, wird der Detektionsdatensatz nicht in der Detektionseinheit 5 gespeichert, andernfalls fährt die Detektionseinheit im Schritt S13 weiter.

In einer weiteren Ausführungsvariante wird durch die Detektionseinheit 5 im Schritt S12, vor der Speicherung des Detektionsdatensatzes im Schritt S13, zudem überprüft, ob die im Schritt S4' empfangene höchste Sequenznummer des Satzes von Authentifizierungsvektoren grösser ist als die im Schritt S11 empfangene grösste im Identifizierungsmodul 2 gespeicherte Sequenznummer, und ob die im Schritt S4' empfangene höchste Sequenznummer des Satzes von Authentifizierungsvektoren kleiner ist als die im Schritt S11 empfangene Sequenznummer, die im Schritt S2 von der Zugangskontrolleinheit 3 an das Identifizierungsmodul 2 übermittelt wurde. Das heisst, es wird überprüft, ob der im Schritt S2'" an die Zugangskontrolleinheit 3 übermittelte Satz von Authentifizierungsvektoren, der möglicherweise nicht verwendet wurde, eine mögliche Ursache ist, für die übergrosse Differenz, die im Schritt S6 berechnet wurde. Falls die höchste Sequenznummer des Satzes von Authentifizierungsvektoren im Bereich zwischen der grössten im Identifizierungsmodul 2 gespeicherten Sequenznummer und der an das Identifizierungsmodul 2 übermittelten Sequenznummer liegt, wird unter Berücksichtigung des im Identifizierungsmodul 2 gespeicherten (respektive an das Identifizierungsmodul 2 übermittelten) Differenzwerts überprüft, ob der übermittelte Satz von Authentifizierungsvektoren und gegebenenfalls weitere nicht verwendete Sätze von Authentifizierungsvektoren die Ursache für die übergrosse Differenz sind, die im Schritt S6 berechnet wurde. Falls der/die Sätze von Authentifizierungsvektor(en) als Ursache in Betracht kommt/kommen, werden die betreffenden Detektionsdatensätze nicht in der Detektionseinheit 5 gespeichert, andernfalls fährt die Detektionseinheit im Schritt S13 weiter.

Um den im Identifizierungsmodul 2 gespeicherten Differenzwert dynamisch zu verändern, wird durch die Detektionseinheit 5 ein Differenzwert über das Kommunikationsnetz 6 an das Identifizierungsmodul 6 übermittelt. Für mehrmalige Verwendung wird der definierte Differenzwert mittels einer Datenmeldung übermittelt und im Identifizierungsmodul 2 gespeichert. Für einmalige Verwendung wird der definierte Differenzwert jeweils zusammen mit den Sequenznummern an das Identifizierungsmodul 2 übermittelt und dort als überschreibender Wert im Zusammenhang mit der betreffenden Sequenznummer verwendet.

Im Schritt S15 wird durch das Identifizierungsmodul 2 überprüft, ob die im Schritt S4 empfangene Sequenznummer grösser ist, als weitere im Identifizierungsmodul 2 gespeicherte Sequenznummern, die vorgängig von der Zugangskontrolleinheit 3 empfangen wurden. Sequenznummern, die im Identifizierungsmodul 2 vorgängig von der selben Zugangskontrolleinheit 3 empfangen wurden, umfassen einen gleichen Indexwert, der zusätzlich zum Sequenzteil in der Sequenznummer enthalten ist. Falls die empfangene Sequenznummer grösser als die vorgängig von der Zugangskontrolleinheit 3 entgegengenommenen Sequenznummern ist, wird die im Schritt S4 empfangene Sequenznummer im Schritt S16 im Identifizierungsmodul 2 gespeichert, andernfalls wird vom Identifizierungsmodul 2 eine Meldung an die Zugangskontrolleinheit 3 übermittelt, die für die vorliegende Erfindung nicht von Bedeutung ist.

Im Schritt S17 übermittelt das Identifizierungsmodul 2 eine Bestätigung an die Zugangskontrolleinheit 3.

Im Schritt S18 kennzeichnet die Zugangskontrolleinheit 3 die im Schritt S4 übermittelte Sequenznummer als verwendet.

## Patentansprüche

1. Verfahren zum Detektieren eines duplizierten Identifizierungsmoduls (2), das eine Teilnehmeridentifizierung umfasst und mit einem Kommunikationsendgerät (1) entfernbar verbunden ist, in welchem Verfahren die Teilnehmeridentifizierung vom Identifizierungsmodul (2) über ein Telekommunikationsnetz (6) an eine computer-basierte Zugangskontrolleinheit (3) übermittelt wird, **gekennzeichnet durch**:
- Ermitteln einer neuen, der Teilnehmeridentifizierung zugeordneten Sequenznummer **durch** die Zugangskontrolleinheit (3),
- Übermitteln der neuen Sequenznummer von der Zugangskontrolleinheit (3) über das Telekommunikationsnetz (6) an das Identifizierungsmodul (2),
- Vergleichen der neuen Sequenznummer mit einer im Identifizierungsmodul (2) gespeicherten älteren Sequenznummer **durch** das ldentifizierungsmodul (2),
- Übermitteln einer Meldung, die die ältere Sequenznummer umfasst, vom Identifizierungsmodul (2) über das Telekommunikationsnetz (6) an die Zugangskontrolleinheit (3), wenn die neue Sequenznummer um mehr als einen definierten Differenzwert grösser ist, als die ältere Sequenznummer,
- auf Grund der Meldung Übermitteln der Teilnehmeridentifizierung, der neuen Sequenznummer und der älteren Sequenznummer an eine computer-basierte Detektionseinheit (5), und
- Speichern eines Detektionsdatensatzes, der die Teilnehmeridentifizierung umfasst, in der Detektionseinheit (5).

2. Verfahren nach Anspruch 1, **dadurch gekennzeichnet, dass** der definierte Differenzwert durch die Detektionseinheit (5) über das Telekommunikationsnetz (6) an das Identifizierungsmodul (2) übermittelt wird.

3. Verfahren nach einem der Ansprüche 1 oder 2, **dadurch gekennzeichnet, dass** vor der Speicherung des Detektionsdatensatzes die Differenz zwischen der neuen Sequenznummer und der älteren Sequenznummer durch die Detektionseinheit (5) berechnet wird, und dass der Detektionsdatensatz nicht in der Detektionseinheit (5) gespeichert wird, wenn die berechnete Differenz kleiner als ein definierter Maximalwert ist.

4. Verfahren nach einem der Ansprüche 1 bis 3, **dadurch gekennzeichnet, dass** durch die Detektionseinheit (5) die Plausibilität von Kommunikationsverbindungen geprüft wird, die im Telekommunikationsnetz (6) mit der im Detektionsdatensatz gespeicherten Teilnehmeridentifizierung durchgeführt werden/wurden, und dass die Teilnehmeridentifizierung durch die Detektionseinheit (5) als dupliziert markiert wird, wenn eine dieser Kommunikationsverbindungen nicht plausibel ist.

5. Verfahren nach Anspruch 4, **dadurch gekennzeichnet, dass** in der Detektionseinheit (5) Kommunikationsdatensätze gespeichert werden, die der im Detektionsdatensatz enthaltenen Teilnehmeridentifizierung zugeordnet sind und die mindestens Angaben über einen Kommunikationszeitbereich umfassen, und dass die Teilnehmeridentifizierung durch die Detektionseinheit (5) als dupliziert markiert wird, wenn der Teilnehmeridentifizierung Kommunikationsdatensätze mit überlappenden Kommunikationszeitbereichen zugeordnet sind.

6. Verfahren nach Anspruch 4 oder 5, **dadurch gekennzeichnet, dass** in der Detektionseinheit (5) Kommunikationsdatensätze gespeichert werden, die der im Detektionsdatensatz enthaltenen Teilnehmeridentifizierung zugeordnet sind, die mindestens Angaben über einen Kommunikationszeitbereich und Angaben über einen Kommunikationsaufenthaltsort umfassen, und dass die Teilnehmeridentifizierung durch die Detektionseinheit (5) als dupliziert markiert wird, wenn der Teilnehmeridentifizierung Kommunikationsdatensätze zugeordnet sind, deren Kommunikationsaufenthaltsorte um eine Distanz auseinander liegen, während deren Kommunikationszeitbereiche um mehr als eine von der Distanz abhängige minimale Zeitspanne auseinander liegen.

7. Verfahren nach einem der Ansprüche 1 bis 6, **dadurch gekennzeichnet, dass** beim Ermitteln der neuen Sequenznummer in der Zugangskontrolleinheit (3), eine noch nicht verwendete Sequenznummer aus einem der Teilnehmeridentifizierung zugeordneten Satz von Sequenznummern entnommen wird, welcher Satz durch die Zugangskontrolleinheit (3) von einer Authentifizierungszentrate (4) angefordert wird, wenn in der Zugangskontrolleinheit (3) die Teilnehmeridentifizierung vom Identifizierungsmodul (2) empfangen wird und der Teilnehmeridentifizierung keine nicht verwendeten Sequenznummern zugeordnet sind, dass der Satz durch die Authentifizierungseinheit (4) mit aufsteigenden Sequenznummern versehen wird, dass durch die Zugangskontrolleinheit (3) der Wert der höchsten im Satz enthaltenen Sequenznummer an die Detektionseinheit (5) übermittelt wird, wenn nach der Übermittlung der niedersten Sequenznummer des Satzes an das Identifizierungsmodul (2) in der Zugangskontrolleinheit (3) keine diesbezügliche Empfangsbestätigung vom Identifizierungsmodul (2) empfangen wird, und dass vor der Speicherung des Detektionsdatensatzes in der Detektionseinheit (5) überprüft wird, ob die höchste Sequenznummer des Satzes grösser als die ältere Sequenznummer und kleiner als die neue Sequenznummer ist.

8. Verfahren nach einem der Ansprüche 1 bis 7, **dadurch gekennzeichnet, dass** beim Vergleichen der neuen Sequenznummer mit der älteren Sequenznummer die grösste im Identifizierungsmodul (2) gespeicherte Sequenznummer als ältere Sequenznummer verwendet wird, und dass die neue Sequenznummer im Identifizierungsmodul (2) gespeichert wird, wenn sie einerseits um nicht mehr als den definierten Differenzwert grösser ist, als die ältere Sequenznummer, und wenn sie andererseits grösser ist, als weitere im Identifizierungsmodul (2) gespeicherte Sequenznummern, die von der Zugangskontrolleinheit (3) empfangen wurden.

9. Verfahren nach einem der Ansprüche 1 bis 8, **dadurch gekennzeichnet, dass** der definierte Differenzwert auf einen Wert festgelegt wird, der wesentlich kleiner als 2²⁸ ist, beispielsweise auf einen Wert im Bereich von 16 bis 64.

10. Verfahren nach einem der Ansprüche 1 bis 9, **dadurch gekennzeichnet, dass** ein Mobilfunknetz als Telekommunikationsnetz (6) verwendet wird, dass ein mobiles Kommunikationsendgerät (1) verwendet wird, dass eine VLR-Einheit oder eine SGSN-Einheit als Zugangskontrolleinheit (3) verwendet wird, dass Sequenznummem aus Authentifizierungsvektoren verwendet werden, die durch eine Authentifizierungszentrale (4) des Mobilfunknetzes generiert werden, die durch die Teilnehmeridentifizierung bestimmt ist, dass eine Resynchronisationsmeldung als Meldung verwendet wird, und dass die Teilnehmeridentifizierung, die neue Sequenznummer und die ältere Sequenznummer von der Zugangskontrolleinheit (3) über die bestimmte Authentifizierungszentrale (4) an die Detektionseinheit (5) weitergeleitet werden.

11. Verfahren nach Anspruch 10, **dadurch gekennzeichnet, dass** das Mobilfunknetz ein UMTS-Mobilfunknetz ist, und dass das Identifizierungsmodul ein USIM-Modul umfasst.

## Claims

1. Method for detecting a duplicated identification module (2), which comprises a subscriber identification and is removably connected to a communication terminal (1 ), in which method the subscriber identification is transmitted from the identification module (2) over a telecommunication network (6) to a computer-based access control unit (3), **characterised by**:
- establishment by the access control unit (3) of a new sequence number, assigned to the subscriber identification,
- transmission of the new sequence number from the access control unit (3) over the telecommunication network (6) to the identification module (2),
- comparison by the identification module (2) of the new sequence number with an older sequence number stored in the identification module (2),
- transmission of a message, comprising the older sequence number, from the identification module (2) over the telecommunication network (6) to the access control unit (3) if the new sequence number is larger than the older sequence number by more than a defined difference value,
- on the basis of the message, transmission of the subscriber identification, of the new sequence number and of the older sequence number to a computer-based detection unit (5), and
- storage in the detection unit (5) of a detection data record comprising the subscriber identification.

2. Method according to claim 1, **characterised in that** the defined difference value is transmitted by the detection unit (5) over the telecommunication network (6) to the identification module (2).

3. Method according to one of the claims 1 or 2, **characterised in that** prior to the storing of the detection data record the difference between the new sequence number and the older sequence number is calculated by the detection unit (5), and **in that** the detection data record is not stored in the detection unit (5) if the calculated difference is less than a defined maximal value.

4. Method according to one of the claims 1 to 3, **characterised in that** checked by the detection unit (5) is the plausibility of communication connections which are/were carried out in the telecommunication network (6) with the subscriber identity stored in the detection data record, and **in that** the subscriber identity is marked by the detection unit (5) as duplicated if one of these communication connections is not plausible.

5. Method according to claim 4, **characterised in that** stored in the detection unit (5) are communication data records which are assigned to the subscriber identification contained in the detection data record and comprise at least indications about a communication period, and **in that** the subscriber identification is marked by the detection unit (5) as duplicated if communication data records with overlapping communication periods are assigned to the subscriber identification.

6. Method according to claim 4 or 5, **characterised in that** stored in the detection unit (5) are communication data records which are assigned to the subscriber identification contained in the detection data record which comprise at least indications about a communication period and indications about a communication location, and **in that** the subscriber identification is marked by the detection unit (5) as duplicated if assigned to the subscriber identification are communication data records whose communication locations diverge by a distance while their communication periods diverge by more than a minimal time span dependent upon the distance.

7. Method according to one of the claims 1 to 6, **characterised in that** when determining the new sequence number in the access control unit (3) a not yet used sequence number is taken from a set of sequence numbers assigned to the subscriber identification, which set is requested by the access control unit (3) from an authentication central unit (4) if the subscriber identification is received in the access control unit (3) from the identification module (2) and no not used sequence numbers are assigned to the subscriber identification, **in that** the set is provided with increasing sequence numbers by the authentication unit (4), **in that** the value of the highest sequence number contained in the set is transmitted by the access control unit (3) to the detection unit (5) if no corresponding confirmation of receipt from the identification module (2) is received in the access control unit (3) after transmission of the lowest sequence number of the set to the identification module (2), and **in that** before storing of the detection data record in the detection unit (5) it is checked whether the highest sequence number of the set is larger than the older sequence number and smaller than the new sequence number.

8. Method according to one of the claims 1 to 7, **characterised in that** when comparing the new sequence number with the older sequence number the largest sequence number stored in the identification module (2) is used as older sequence number, and **in that** the new sequence number is stored in the identification module (2) if, on the one hand, it is larger than the older sequence number by not more than the defined difference value and, on the other hand, it is larger than further sequence numbers stored in the identification module (2) which have been received from the access control unit (3).

9. Method according to one of the claims 1 to 8, **characterised in that** the defined difference value is established at a value which is substantially smaller than 2²⁸, for example at a value in the range of 16 to 64.

10. Method according to one of the claims 1 to 9, **characterised in that** used as telecommunication network (6) is a mobile radio network, **in that** a mobile communication terminal is used, **in that** used as access control unit (3) is a VLR unit or a SGSN unit, **in that** sequence numbers from authenticity vectors are used which are generated by an authentication central unit (4) of the mobile radio network, which central unit is determined through the subscriber identification, **in that** used as message is a resynchronisation message, and **in that** the subscriber identification, the new sequence number and the older sequence number are forwarded from the access control unit (3) via the determined authentication central unit (4) to the detection unit (5).

11. Method according to claim 10, **characterised in that** the-mobile radio network is a UMTS mobile radio network, and **in that** the identification module comprises a USIM module.

## Revendications

1. Procédé pour la détection d'un module d'identification dupliqué (2) qui comprend une identification d'abonné et qui est relié de manière amovible à un terminal de communication (1), procédé dans lequel l'identification d'abonné est transmise par le module d'identification (2) par un réseau de télécommunication (6) à une unité de contrôle d'accès assistée par ordinateur (3) **caractérisé par** :
- la transmission d'un nouveau numéro de séquence associé à l'identification d'abonné par l'unité de contrôle d'accès (3),
- la transmission du nouveau numéro de séquence par l'unité de contrôle d'accès (3), par le réseau de télécommunication (6) au module d'identification (2),
- la comparaison du nouveau numéro de séquence à un numéro de séquence antérieur stocké dans le module d'identification (2),
- la transmission d'un message qui comprend l'ancien numéro de séquence, par le module d'identification (2) par l'intermédiaire du réseau de télécommunication (6) à l'unité de contrôle d'accès (3), si le nouveau numéro de séquence est supérieur de plus d'une valeur de différence définie à l'ancien numéro de séquence,
- sur la base du message la transmission de l'identification d'abonné, du nouveau numéro de séquence et de l'ancien numéro de séquence à une unité de détection assistée par ordinateur (5), et
- la mémorisation d'un jeu de données de détection qui comprend l'identification d'abonné dans l'unité de détection (5).

2. Procédé selon la revendication 1, **caractérisé en ce que** la valeur de différence définie est transmise par l'unité de détection (5) par le biais du réseau de télécommunication (6) au module d'identification (2).

3. Procédé selon l'une des revendications 1 ou 2, **caractérisé en ce qu'**avant la mémorisation du jeu de données de détection, la différence entre le nouveau numéro de séquence et l'ancien numéro de séquence est calculée par l'unité de détection (5) et **en ce que** le jeu de données de détection n'est pas mémorisé dans l'unité de détection (5) si la différence calculée est inférieure à une valeur maximale définie.

4. Procédé selon l'une des revendications 1 à 3, **caractérisé en ce que** l'unité de détection (5) vérifie la plausibilité des connexions de communication qui sont/ont été effectuées dans le réseau de télécommunication (6) avec l'identification d'abonné stockée dans le jeu de données de détection et **en ce que** l'identification d'abonné est marquée comme dupliquée par l'unité de détection (5) si l'une de ces connexions de communication n'est pas plausible.

5. Procédé selon la revendication 4, **caractérisé en ce que** dans l'unité de détection (5) sont stockés des jeux de données de détection qui sont associés à l'identification d'abonné contenue dans le jeu de données de détection et qui comprennent au moins des indications sur une zone de temps de communication et **en ce que** l'identification d'abonné est marquée par l'unité de détection (5) comme étant dupliquée si l'identification d'abonné est associée à des jeux de données de communication avec des zones de temps de communication se chevauchant.

6. Procédé selon la revendication 4 ou 5, **caractérisé en ce que** dans l'unité de détection (5) sont stockés des jeux de données de détection qui sont associés à l'identification d'abonné contenue dans le jeu de données de détection et qui comprennent au moins des indications sur une zone de temps de communication et **en ce que** l'identification d'abonné est marquée par l'unité de détection (5) comme étant dupliquée si l'identification d'abonné est associée à des jeux de données de communication dont les lieux de communication sont séparés d'une distance tandis que leurs zones de temps de communication sont séparées de plus d'un intervalle de temps minimal dépendant de la distance.

7. Procédé selon l'une des revendications 1 à 6, **caractérisé en ce que** lors de la détermination du nouveau numéro de séquence dans l'unité de contrôle d'accès (3), un numéro de séquence encore inutilisé est déduit d'un jeu de numéros de séquence associé à l'identification d'abonné, lequel jeu est demandé par l'unité de contrôle d'accès (3) d'une centrale d'authentification (4), si dans l'unité de contrôle d'accès (3), l'identification d'abonné est réceptionnée par le module d'identification (2) et que l'identification d'abonné n'est associée à aucun numéro de séquence utilisé, **en ce que** le jeu est muni par l'unité d'authentification (4) de numéros de séquence croissants, **en ce que** par l'unité de contrôle d'accès (3), la valeur du numéro de séquence le plus élevé contenu dans le jeu est transmise à l'unité de détection (5) si après la transmission du numéro de séquence le plus bas du jeu au module d'identification (2) dans l'unité de contrôle d'accès (3) aucun accusé de réception relatif n'est réceptionné par le module d'identification (2) et **en ce qu'**avant le stockage du jeu de données de détection dans l'unité de détection (5), il est vérifié si le numéro de séquence le plus élevé du jeu est supérieur au numéro de séquence plus ancien et est inférieur au nouveau numéro de séquence.

8. Procédé selon l'une des revendications 1 à 7, **caractérisé en ce que** lors de la comparaison du nouveau numéro de séquence avec l'ancien numéro de séquence, le numéro de séquence le plus élevé stocké dans le module d'identification (2) est utilisé en tant qu'ancien numéro de séquence et **en ce que** le nouveau numéro de séquence est mémorisé dans le module d'identification (2) si d'une part il n'est pas plus grand que l'ancien numéro de séquence de l'équivalent de la valeur de différence définie et si d'autre part, il est supérieur à d'autres numéros de séquence mémorisés dans le module d'identification (2) qui ont été reçus par l'unité de contrôle d'accès (3).

9. Procédé selon l'une des revendications 1 à 8, **caractérisé en ce que** la valeur de différence définie est fixée à une valeur qui est sensiblement inférieure à 2²⁸, par exemple à une valeur comprise entre 16 et 64.

10. Procédé selon l'une des revendications 1 à 9, **caractérisé en ce qu'**un réseau de téléphonie mobile cellulaire est utilisé comme réseau de télécommunication (6), **en ce qu'**un terminal de communication mobile (1) est utilisé **en ce qu'**une unité VLR (Visitor Location Register = enregistreur de localisation de visiteurs) ou une unité SGSN (Serving GPRS Support Node = noeud de support GPRS de service) sont utilisées, **en ce que** des numéros de séquence à partir de vecteurs d'authentification sont utilisés, lesquels sont générés par une centrale d'authentification (4) du réseau de téléphonie cellulaire mobile qui est déterminée par l'identification d'abonné, **en ce qu'**un message de resynchronisation est utilisé comme message et **en ce que** l'identification d'abonné, le nouveau numéro de séquence et l'ancien numéro de séquence de l'unité de contrôle d'accès (3) sont transmis par la centrale d'authentification définie (4) à l'unité de détection (5).

11. Procédé selon la revendication 10, **caractérisé en ce que** le réseau de téléphonie mobile cellulaire est un réseau de téléphonie mobile cellulaire UMTS (Universal Mobile Telecommunication System = système universel de télécommunication avec les mobiles) et **en ce que** le module d'identification (2) est un module USIM (Universal Suscriber Identity Module = module universel d'identification d'abonné).
